# EUROPEAN PATENT APPLICATION

(11) **EP 4 836 252 A1**
(43) Date of publication of application: **04.11.2026**
(21) Application number: 26174687.9
(22) Date of filing: 27.04.2026
(51) Int. Cl.: H02K 3/52, H02K 15/33

(54) **WIRE HOLDER CAP AND ASSEMBLY**

(30) Priority: 30.04.2025 IN 202541041756
(71) Applicant: TE Connectivity Solutions GmbH, 8200 Schaffhausen (CH); Tyco Electronics (Shanghai) Co., Ltd., Pilot Free Trade Zone Shanghai 200131 (CN)
(72) Inventor: Muthupandi, Deepan Ponraj, 560066 Bangalore, KA (IN); Indi, Vinut, 560066 Bangalore, KA (IN); Huang, Yongjian, Shanghai, 200233 (CN)
(74) Representative: Grünecker Patent- und Rechtsanwälte PartG mbB

(57) **Abstract**

The invention relates to a wire holder cap (100) for mounting to a stator frame (600) of a motor along a mounting direction (108), comprising a ring base (102) spanning a base plane (106). The wire holder cap (100) further comprises a plurality of wire retainers configured to retain at least one wire (200) and guide the at least one wire (200) along a wiring path (112) on an axial wire holder surface (110) of the ring base (102). The wire holder cap (100) further comprises a contact opening (134) extending along the base plane (106), configured to enable axial access to at least one wire (200) extending along the base plane (106). Some of the wire retainers (116) are located on opposite sides (203a, 203b) of the contact opening (134) along the base plane (106). A straight line (139) between the wire retainers (116) located on opposite sides (203a, 203b) of the contact opening (134) crosses the contact opening (134) parallel to the base plane (106). The invention further relates to an assembly (600) with the wire holder cap (100) and a stator frame (600) of a motor.

## Description

The present invention relates to a wire holder cap and an assembly with a wire holder cap.

Electric motors, such as a brushless DC electric motor, comprise lead wires, which are external wires that connect the motor to a power source. The motor further comprises a stator, the stationary part of the motor that contains magnet wires typically wound around the stator to create a magnetic field. The magnetic field interacts with the rotor, causing it to turn. To provide the necessary power for generating the magnetic field, the external lead wires must be connected to the magnet wires of the stator.

When connecting external lead wires to the magnet wires linked to the stator windings of a motor, a separate element, commonly formed as a cap or lid, is typically used. The lead wires are mounted onto the cap and after that, the cap is attached to the stator.

Known caps for motors are complicated to assemble and mount to the motor. They are time-consuming and expensive.

There is therefore a need for simplifying the assembly process of a motor, in particular the cap to be mounted to the motor or stator frame of the motor.

This need is met by a wire holder cap for mounting to a stator frame of a motor along a mounting direction, comprising a ring base spanning a base plane; a plurality of wire retainers configured to retain at least one wire and guide the at least one wire along a wiring path on an axial wire holder surface of the ring base; wherein the wire holder cap comprises a contact opening extending along the base plane, configured to enable axial access to at least one wire extending along the base plane; wherein some of the wire retainers are located on opposite sides of the contact opening along the base plane; and wherein a straight line between the wire retainers located on opposite sides of the contact opening crosses the contact opening parallel to the base plane.

The above solution is advantageous, because the wire holder cap allows for an easy and quick production of the motor. The guidance along the wiring path facilitates the assembly of the wire holder cap and mounting of wires before assembling. The straight line connecting two wire retainers across the contact opening parallel to the base plane allows a wire to be pulled taut across the contact opening to withstand a termination force, in particular along the mounting direction. Due to the axial access, the above solution further enables an easier termination or electrical connection in one step, for example, by pushing the wire holder cap towards a termination means, for example an insulation displacement contact (IDC).

The invention can be further improved by the following embodiments, which are advantageous in themselves and which can be arbitrarily combined with one another.

The ring base may be annular and may therefore comprise a through-hole in the mounting direction or axial direction to enable an easier assembling process with the stator frame of a motor. The through-hole can contribute to a lightweight design and an optimized material usage. The ring base may therefore comprise an inner ring diameter defining the size of the through-hole along the base plane, in addition to an outer ring diameter extending across the base plane.

An axial axis of the ring base may be aligned with the mounting direction and pass through a center of the ring base. The base plane can extend in a direction perpendicular to the mounting direction and the mounting direction may correspond to the normal of the base plane. A flat surface, in particular the axial wire holder surface, of the ring base may define the base plane.

The wiring path located on the base plane is configured to guide one or more wires along the axial wire holder surface, at least in sections. The at least one wire can be guided along the base plane to cross the contact opening parallel to the base plane and can abut the wire holder surface while being guided along the wiring path.

The wiring path may lead one or more wires from a power source along the ring base to the contact opening. The wiring path may guide multiple wires to different wire retainers and/or different contact openings, effectively guiding each wire to a designated termination location each. For example, two wires originating from the same power source may be led along two different wire directions along the wiring path. In one embodiment, multiple wires may be guided along the same wire direction along the wiring path, at least in sections. Along the wiring path, the wires may cross the contact opening.

The wiring path can be predetermined, for example by arranging the wire retainers on the base plane in a pre-defined way.

The wire retainers can protrude from the base plane in the direction opposite the mounting direction and can hold a wire in place. The wire retainers may extend from the ring base from a flat surface, for example, the axial wire holder surface in the direction opposite the mounting direction. The wire retainers may in particular tension the wire, which is advantageous for termination with for example an insulation displacement contact (IDC).

The wire retainers can have different embodiments and can be configured, for example, as a wire retainer pin. The wire retainer pin can be a cylindrical protrusion extending from the base plane in the direction opposite the mounting direction, which can be used as a wire routing pin, routing the wire along a wire direction and rerouting to a different wire direction along the wiring path as needed. The wire retainer pin may route one wire from the initial direction to a different wire direction. The different wire direction may be, for example, perpendicular to the initial direction. The wires may therefore extend along the radial direction, away from the center of the wire holding cap. The at least one wire can for example, be wrapped around the wire retainer pin at least partially about the axial axis of the wire retainer pin to tension the at least one wire and/or to guide the at least one wire along a different direction of the wiring path.

The wire retainer can be configured as an L-shaped wire retainer or, synonymously, as an angled, in particular a right-angled wire retainer. The angled wire retainer can protrude from the base plane in the direction opposite the mounting direction and can then be bent at an angle, for example at a 90° angle, the wire retainer end pointing towards the center of the ring base. The recess created by the bend can be used to clamp the at least one wire in-between the ring base and the angled wire retainer.

Another embodiment of the wire retainer can be configured as a pair of wire retainer elements with a wire retainer tab each. The wire retainer tabs can be formed at the ends of the wire retainer elements protruding away from the axial wire holder surface. The at least one wire may be clipped into the pair of wire retainer elements and be retained by the wire retainer tabs that prevent the wire from being pulled out in a direction opposite the mounting direction.

The wire retainer can comprise at least one cavity. The cavity can be formed as a form-fitting cavity, configured to receive at least one wire. The at least one wire may abut the wire retainer within the cavity. The cavity can be formed as a semicircular receptacle and have the same or a slightly bigger diameter than the diameter of the respective wire. The wire retainer can comprise two cavities arranged side-by-side to receive two parallel wires along the wiring path.

**In** one embodiment, at least one wire retainer can be separable, formed as a separate part from the ring base and be configured to be clipped onto the ring base. In this case, the wire retainer can comprise fastening means. The fastening means can be, for example, a retainer tab or a latch that can engage with a complementary retention hole located on the ring base along the base plane. The ring base may comprise retention holes to receive the at least one wire retainer. Separable wire retainers can be replaced easily and facilitate maintenance of the wire holder cap. The different wire retainer embodiments allow an easier routing of the wire along the wiring path, secure the wires and enable a more flexible approach in adding wire/s. Other embodiments of the wire retainers may be manufactured monolithically, being formed as one part with the ring base.

The wire retainers can push at least one wire towards the axial wire holder surface along the mounting direction so that the at least one wire abuts the axial wire holder surface, holding the wire in place. The wire retainers can restrict unwanted movement of the wires and prevent wires from deviating from the wiring path or from loosening from the wire holder surface.

The wire holder cap may comprise at least one of the aforementioned wire retainer embodiments. Therefore, fewer different parts are needed that fulfil the purpose of retaining at least one wire. The wire holder cap may comprise a combination of all of the aforementioned wire retainer embodiments on the axial wire holder surface, accommodating to different assembling needs and different wire sizes.

The wire retainers may be arranged along a circumferential direction of the ring base, in particular along the wiring path. The wire retainers can be spaced apart from each other with respect to the circumferential direction. **In** one embodiment, the wire retainers can be arranged equidistantly along the circumferential direction of the ring base. The spacing of the wire retainers can vary depending on the needs and motors or stator frames used.

The wire retainers may be configured to hold at least one wire, taut enough for an IDC or termination contact to cut through the insulation of the at least one wire.

At least one wire can span the width of the contact opening. Naturally, the at least one wire may also be spanned along the length of the contact opening, which can extend perpendicular to the width parallel to the base plane. The wire/s may be spanned to cross the contact opening along the base plane in an arbitrary direction, as long as a termination contact can pass through the contact opening to access the spanned wire/s. The wire retainers may hold the wire/s in place and can tension the at least one wire to enable an easier termination of the at least one wire. The wire retainers can withstand a termination force applied to the wire, for example along the mounting direction.

The straight line connecting the at least two wire retainers across the contact opening may be a virtual line. The straight line can extend along the wiring path and across the contact opening, which enables an optimal preparation of a wire to be mounted to the wire holder cap, allowing a tensioning of a wire spanned along the straight line between the at least two wire retainers. The straight line can cross the opening along a direction perpendicular to the mounting direction, and can connect two wire retainers in a radial direction. The radial direction can extend perpendicular to the mounting direction and point from the center of the ring base to the outer diameter of the ring base. The straight line further facilitates the axial access to at least one wire.

Axial access to at least one wire extending along the base plane in this text refers to the at least one wire being accessible from a direction perpendicular to the base plane, along and/or parallel to the mounting direction.

To enable the axial access, the contact opening can be arranged on the base plane and extend across it. The axial access can be enabled for termination means such as a termination contact or IDC that can be configured to pass through the contact opening along the mounting direction and therefore through the base plane.

The contact opening can have an arbitrary shape and can be formed, for example, as an elongated hole, extending along the circumferential direction of the ring base. In one embodiment, the contact opening can have a greater length than its width or vice versa.

The contact opening can be arranged between at least two wire retainers located on the base plane, for example, the axial wire holder surface. This way, a wire can be held between the at least two wire retainers to cross the contact opening along the base plane and extends along the straight line connecting the at least two wire retainers.

The contact opening, in particular a length or longitudinal side of the contact opening, can extend along the circumferential direction of the ring base. A width of the contact opening can extend along the radial direction perpendicular to the mounting direction.

In one embodiment, the contact opening can be arranged on the ring base, for example on the axial wire holder surface and can therefore save space and keep the outer contour smooth and/or cylindrical, if desired.

The contact opening may be surrounded by a frame that protrudes from the ring base in the radial direction. The frame can protrude from the outer diameter of the ring base, away from the center of the ring base. One embodiment of the frame can take a U-shape or a semi-circular form, with the closed end of the "U" or semi-circular form oriented away from the center of the ring base. The free ends of the "U" or semi-circular form can be monolithically integrated with the outer diameter or exterior surface of the ring base. The frame and the ring base can therefore be formed monolithically to achieve fewer parts in the assembly process.

At least one wire retainer can be arranged on the frame. This facilitates guiding and tensioning the wire across the contact opening that is surrounded by the frame.

The frame may further comprise a breakage line. The frame can be configured to be separable from the ring base along the breakage line. That breakage line or cut-off line can be configured as a weakened mechanical part of the ring base, for example by having a thinner material thickness than the rest of the wire holder cap to simplify separating the frame from the ring base.

Other embodiments of the wire holder cap may comprise a frame that is formed separately from the ring base and can be mounted to the ring base to allow for more flexibility of the final product.

The frame can already be configured as a separated part with mounting means, mounting the frame to the ring base and demounting it as needed.

The wire holder cap may comprise at least one wire. The wires can be guided along the wiring path. For example, the lead wires connected to the power source or connector can be arranged on the wire holder cap and be configured to be connected to magnet wires of the stator frame of the motor, to which the wire holder cap is mounted.

At least one wire may be accessible through the contact opening to be terminated by a termination contact or IDC. In one embodiment, multiple wires parallel to each other along the radial direction can be arranged side by side and be accessible through the contact opening for multiple termination contacts arranged beneath the wires.

Beneath the wires can be understood as the termination contacts being arranged further along the mounting direction. Further along the mounting direction defines the lower assembling section of the assembly. According to this definition, the stator frame can be arranged below the wire holder cap. The axial wire holder surface can be defined as the upper surface of the ring base. The surface opposite to that wire holder surface can be defined as the motor surface or lower surface. The motor surface can face a stator frame of the motor.

The wire holder cap may comprise a termination access structure that comprises the contact opening and the frame. The termination access structure fulfils the purpose of providing the wire across the contact opening for a termination contact to access along the mounting direction.

The termination access structure may comprise multiple wires. The frame may hold one or more wires. One embodiment of the frame may comprise two wires that are routed parallel to each other along the radial direction across the respective contact opening.

The termination access structure may comprise at least one strain protection for the at least one wire. The stain protection can be configured to be an incline guiding the wire from one wire retainer to the contact opening. This way the wire can rest on the incline after being terminated, preventing strain on the wire after it is being terminated.

The wire holder cap may comprise multiple termination access structures arranged along the circumferential direction of the ring base. For example, the wire holder cap may comprise three termination access structures, each comprising a frame extending in the radial direction away from the center of the wire holder cap.

The termination access structures can be evenly distributed across the diameter of the ring base and can be spaced apart with the same distance from one another. Other embodiments can have arbitrary distances between the termination access structures to better adjust to the dimensions of the stator frame, for example.

The wire holder cap may comprise at least one fastening element configured to engage with a complementary fastening element of the motor. This feature contributes to a simple assembly, in particular when the fastening element can be clipped to the complementary fastening element by pushing the wire holder cap in mounting direction.

The fastening element may be integral with the ring base. **It** may extend along a radial direction parallel to the base plane. The fastening element may engage with a complementary fastening element of the stator frame of the motor and may comprise, for example, a fastening slot, through the complementary fastening element, for example, a fastening tab of the stator frame may be inserted to engage with the fastening element.

The wire holder cap may further comprise an edge extending along the mounting direction. This has the advantage of keeping wires or loose components within the ring base's dimensions for an easier assembly.

At the positions where the at least one frame and/or the power connector are located along the outer diameter or exterior side of the ring base, the edge can be removed or be lower than the rest of the ring base along the circumferential direction. Removing the edge at those locations enables the wires to extend radially along the radial direction without straining the wires or risk cutting or breaking the wires over a thin and potentially sharp edge.

The need is further met by an assembly with a holder cap as described above, comprising a stator frame to which the wire holder cap is mounted along the mounting direction.

The stator frame can be annular, similar to the ring base. The dimensions of the wire holder cap can be adjusted to the dimensions of the stator frame. The stator frame can have, for example, a diameter that is approximately the same or larger as the diameter of the wire holder cap.

The stator frame may be aligned to the same axial axis along the mounting direction.

The stator frame may comprise a protrusion or stator tooth for motor windings, extending radially inwards, towards the axial axis or center.

Before assembling, the stator frame may already have windings spun on the stator tooth. The stator frame may comprise multiple stator teeth with multiple windings.

The stator frame may further comprise a termination contact. The termination contact may be configured to terminate at least one wire guided along the wiring path of the wire holder cap. The termination contact can be configured to pass through the contact opening of the wire holder cap along the mounting direction. The termination contact can be an IDC.

The termination contact or IDC can extend through the contact opening in a direction perpendicular to the base plane to access the at least wire.

The termination contact may have blades that cut through the insulation of the wire crossing the contact opening along the base plane. The termination contact may further comprise blades configured to cut through wires on the stator frame, for example, magnet wires. The termination contact can therefore establish an electrical connection between the wires on the wire holder cap and the wires of the stator frame.

The termination contact may further comprise a lead wire end. The lead wire end may protrude in the direction opposite the mounting direction towards the wire holder cap. This lead wire end may also be configured as an IDC to cut through the insulation of the wire on the axial wire holder surface, which can be a lead wire to power the motor.

The termination contact may be arranged in a contact receptacle of the stator frame. The contact receptacle may be arranged along the circumference of the stator frame, in particular along the circumferential direction. The contact receptacle may protrude in the direction opposite the mounting direction towards the wire holder cap. In one embodiment, the contact receptacles may be arranged along an outer diameter of the stator frame.

The stator frame may further comprise a frame height and the contact receptacle may comprise a greater height than the frame height along the mounting direction.

In a pre-termination state of the assembly, the wire holder cap can be fastened to the motor, for example to the stator frame of the motor. The at least one wire accessible through the contact opening of the wire holder cap can be positioned directly at the termination contact. The fastening elements of the wire holder cap can engage with the complementary fastening elements of the stator frame. The complementary fastening elements can comprise a fastening lip that can engage with the fastening element of the wire holder cap that can be configured as a fastening slot, for example.

The stator frame may be arranged coaxially to the wire holder cap. The wire holder cap may be arranged and rotated about the common axial axis in a way, so that the termination contact is positioned directly under or beneath at least one wire of the wire holder cap with respect to the mounting direction.

In another embodiment, the assembly can be inserted into a termination machine in the pre-termination state. The termination access structure including the wires can then be pushed in mounting direction towards the stator frame. Of course it is also conceivable that the stator frame can be pushed towards the wire holder cap in the direction opposite the mounting direction for the IDC or the termination contact to cut through the insulation of the at least one wire on the wire holder cap. The termination can be done all at once by applying a consistent force in mounting direction on the whole ring base. The termination may be done separately and individually for each termination access structure and/or each individual wire and termination contact pair.

In a final terminated state, the at least one wire can be terminated by the termination contact and enable an electrical connection to the stator frame of the motor. The wire holder cap can be arranged closer to the stator frame and can abut the stator frame along the mounting direction, for example the edge of the stator frame. The termination contact may extend through the contact opening in the terminated state. After the at least one wire is terminated, the user can cut the wire and/or separate the frame from the ring base to achieve a compact design of the whole assembly.

The assembly may comprise multiple termination contacts passing through at least one contact opening of the wire holder cap.

The assembly and/or the stator frame may comprise multiple contact receptacles along the circumference of the stator frame and therefore comprise multiple termination contacts within the contact receptacles.

The invention will be explained hereafter in more detail by way of example with reference to the drawings. The feature combinations illustrated in the embodiments shown by way of example can be supplemented by further features in accordance with the above statements in correspondence with the properties of the invention required for a specific application. Individual features can also be omitted in accordance with the above statements from the embodiments described if the effect of these features is of no relevance for a specific application. The same reference numerals in the drawings are always used for elements having the same function and/or the same structure.
- Fig. 1: shows a schematic view of an embodiment of a wire holder cap;
- Fig. 2: shows a schematic view of a section of an embodiment of a wire holder cap with the opening;
- Fig. 3: shows a schematic view of an embodiment of the wire holder cap with installed wires;
- Fig. 4: shows a schematic view of an embodiment of the wire holder cap with separable wire retainers;
- Fig. 5: shows a schematic view of an embodiment of the wire holder cap with separable wire retainers;
- Fig. 6: shows a schematic view of an embodiment of the assembly in a pre-assembly state;
- Fig. 7: shows a schematic view of an embodiment of the assembly in a locked state; and
- Fig. 8: shows a schematic view of an embodiment of the assembly in a terminated state.

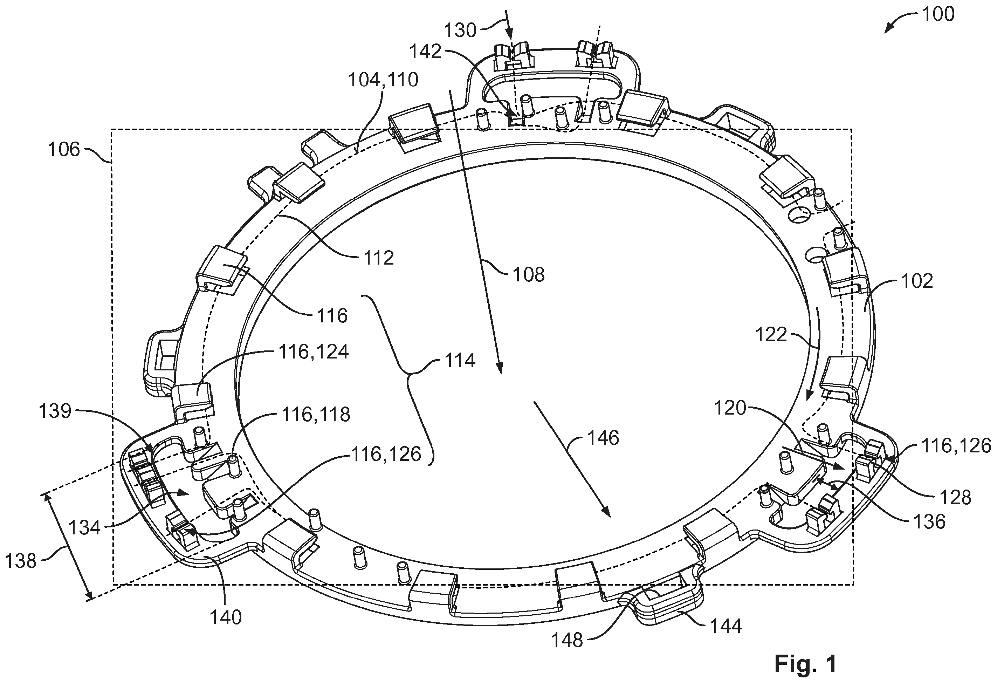

Figure 1 shows an embodiment of a wire holder cap 100. The wire holder cap 100 comprises a ring base 102. The ring base 102 can be ring-shaped. A flat surface 104 of the ring base 102 may span a base plane 106, which is perpendicular to a mounting direction 108.

The ring base 102 may comprise an axial wire holder surface 110 on which one or multiple wires can be arranged along a wiring path 112. The axial wire holder surface 110 may coincide with the flat surface 104 of the ring base 102. The wiring path 112 can be predetermined and a wire following the wiring path 112 can be held and/or be guided by a plurality of wire retainers 114. The plurality of wire retainers 114 may protrude from the axial wire holder surface 110 of the ring base 102 in a direction opposite of the mounting direction 108. The plurality of wire retainers 114 can be configured to retain and/or route the wire/s on the axial wire holder surface 110 of the ring base 102.

A wire retainer 116 of the plurality of wire retainers 114 may have different wire retainer embodiments. For example, a wire retainer can be shaped as a wire retainer pin 118. The wire retainer pin 118 may be used to wrap one or more wires around the pin to guide the wire/s in a different wire direction 120 along the base plane 106 or to reroute the wire/s extending along an initial wire direction 122 in a different wire direction 120.

The wire retainer 116 may be configured as an L-shaped wire retainer 124, which retains the wire/s on the wiring path 112, preventing the wire from straying from the wiring path 112. The **L-**shaped wire retainer 124 may be used to secure the wire on the predetermined wiring path 112.

The wire retainer 116 may be configured as a pair of wire retainer elements 126 with a wire retainer tab 128 each. The wire retainer tabs 128 can be configured to hold on to at least one wire. The wire may be clipped into the pair of wire retainer elements 126 along a direction 130 parallel to the mounting direction 108, moving the wire along the direction 130 towards the axial wire holder surface 110.

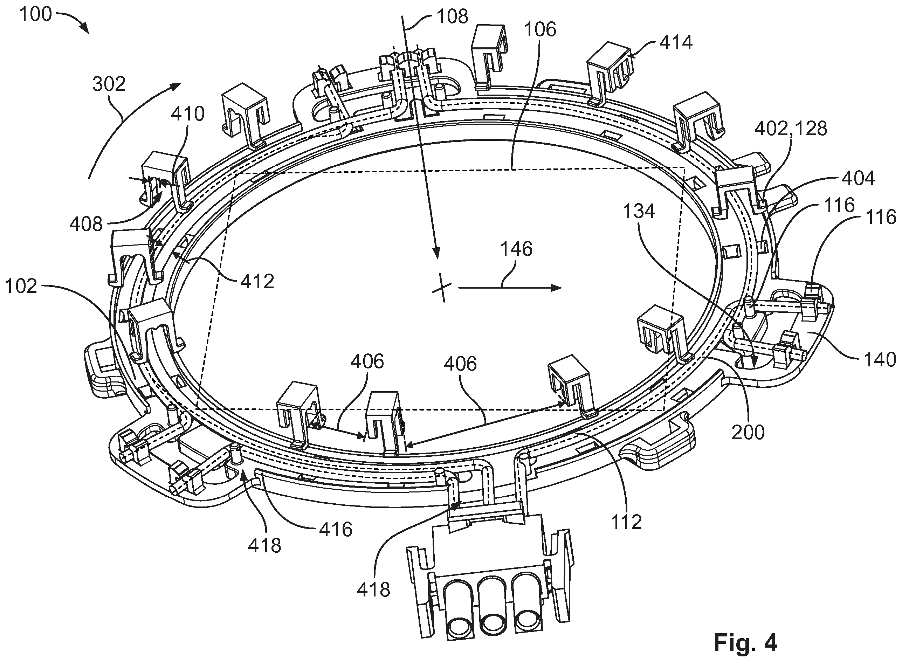

The wire retainers 116 may be formed integrally with the ring base 102. In another embodiment, the wire retainers can be separable from the ring base 102 and be separate parts that can be mounted onto the ring base 102, for example in the embodiment in Fig. 4.

The ring base 102 may comprise at least one of the aforementioned embodiments of the wire retainers 116. In another embodiment, the ring base 102 may comprise all of the aforementioned embodiments of the wire retainer 116.

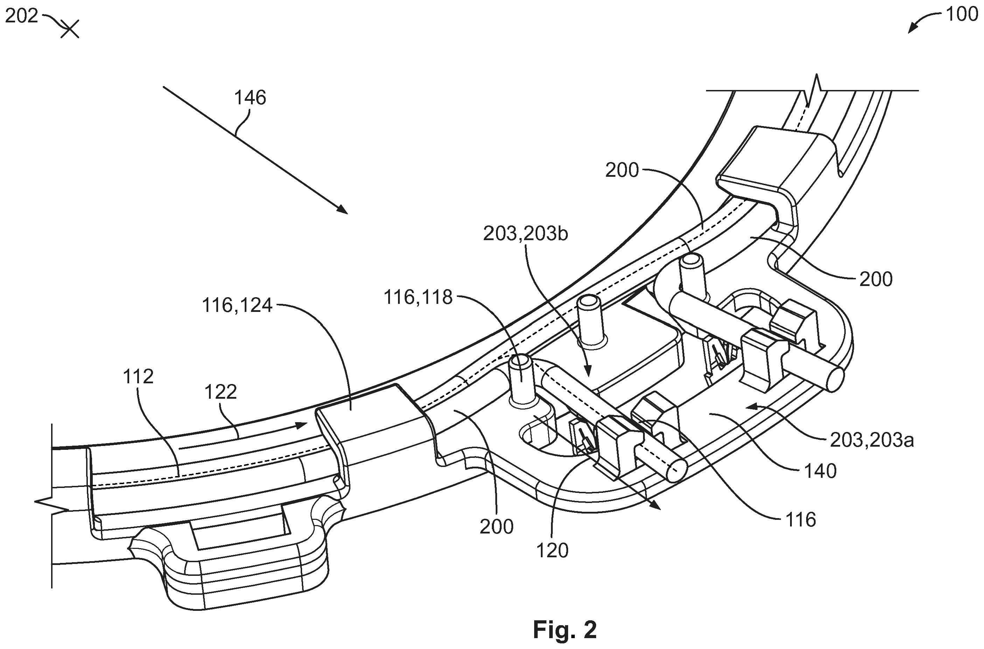

The wire holder cap 100 further comprises a contact opening 134, through which a termination contact (Fig. 2) can extend to access one or more wires crossing the contact opening 134 along the base plane 106. The termination contact may be an IDC and may cut through the insulation of the wire/s crossing the contact opening 134 along the base plane 106 to establish an electrical connection between the wire on the axial wire holder surface 110 of the ring base 102 and another wire, for example a magnet wire of the motor.

The contact opening 134 may be located between at least two wire retainers 116 arranged on the base plane 106. In that case, at least one wire can span along a width 136 of the contact opening 134. Naturally, the at least one wire may also be spanned along a length 138 of the contact opening 134, which can extend perpendicular to the width 136 parallel to the base plane 106. The wire/s may be spanned to cross the contact opening 134 along the base plane 106 in an arbitrary direction, as long as a termination contact can pass through the contact opening 134 to access the spanned wire/s. The wire retainers 116 may hold the wire/s in place and can tension the at least one wire to enable an easier termination of the at least one wire. A straight line 139 between the wire retainers 116 located on opposite sides of the contact opening 134 crosses the contact opening 134 parallel to the base plane 106. The straight line 139 can be a virtual line connecting two wire retainers 116 across the contact opening 134 along the base plane 106.

The contact opening 134 can be arranged on the ring base 102, extending along the base plane 106. In another embodiment, the contact opening 134 may be framed by a frame 140. The frame 140 may be formed integrally with the ring base 102. The frame 140 may comprise wire retainers 116 on either side, i.e. two opposite sides of the contact opening 134 to enable routing at least one wire across the contact opening 134 in a direction parallel to the base plane 106.

The frame 140 and/or the ring base 102 may comprise a strain protection 142 along the wiring path 112. The at least one wire can abut a flat surface 104 of the ring base 102, for example the axial wire holder surface 110. An embodiment of the strain protection 142 can be configured as an incline, which may be used for strain relief of the wire, especially after being terminated. Of course, other means of strain protection of the wires may also be added to the wire holder cap 100 and/or the wires themselves, for example in the form of strain relief clamps.

The wire holder cap 100 may further comprise a fastening element 144. The fastening element 144 may be integral with the ring base 102 as well. It may extend along a radial direction 146 parallel to the base plane 106. The fastening element 144 may engage with a complementary fastening element of the stator frame of the motor and may, for example, comprise a fastening slot 148, through which the complementary fastening element, for example a fastening tab of the stator frame may be inserted to engage with the fastening element 144.

Fig. 2 shows a section of an embodiment of a wire holder cap 100. The wire holder cap 100 may comprise wires 200 that follow the wiring path 112. The wires 200 may be guided by the wire retainers 116.

The frame 140 may extend along the radial direction 146, along the base plane 106, away from a center 202 of the wire holding cap 100. The frame 140 may surround the contact opening 134 in the base plane 106. At least one wire retainer 116 can be arranged on a side 203 of the contact opening 134 and can be located on the base plane 106. The side 203a can face the radial direction 146 and can be located further away from the center 202 along the radial direction 146 than the widest dimension of the ring base 102 along the radial direction 146. At least one other wire retainer 116 can be arranged on the opposite side 203b of the contact opening 134, the opposite side 203b being closer to the center 202 along the radial direction 146.

The wire retainer 116, for example the L-shaped wire retainer 124, may hold two parallel wires 200 along the wiring path 112. The wire retainer 116, for example the wire retainer pin 118, may route one wire 200 from the initial direction 122 to a different wire direction 120. The different wire direction 120 may be, for example, perpendicular to the initial direction 120. The wires 200 may therefore extend along the radial direction 146, away from the center 202 of the wire holding cap 100.

One embodiment may comprise two parallel wires 200 extending across the contact opening 134 along the base plane 106. Through the contact opening 134 in the mounting direction 108, the wires 200 may be accessible to one or more termination contacts 204. The termination contact 204 may be configured as an insulation displacement contact (IDC).

The wire retainers 116 may be configured to hold at least one wire 200, taut enough for the IDC or termination contact 204 to cut through the insulation of the at least one wire 200. For that purpose, the wire retainer 116 may comprise, for example, wire retainer tabs 128 or be configured as the L-shaped wire retainer 124 or the wire retainer pin 118.

The frame 140 may be configured to be separable from the ring base 102. The frame 140 may comprise, for example, one or more breakage lines or cut-off lines 206. The breakage line 206 may be located close to the ring base 102, and may be located at an exterior side of the ring base 102, from where the frame 140 extends away from the center 202 of the wire holder cap 100. This may contribute to a more compact design of the final assembly.

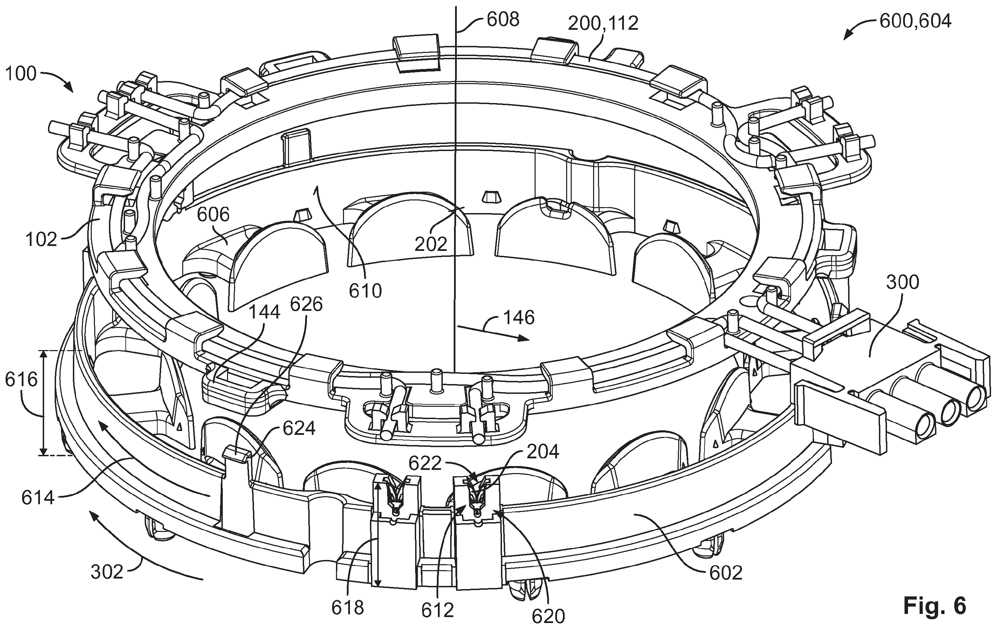

After the wire or wires 200 are terminated by the termination contacts 204, the strain protection 142, in Figure 2 configured as an incline, ensures strain relief of the respective cut wire 200. The termination contact 204 or IDC can be part of the motor or stator frame (Fig. 6) of the motor to which the wire holder cap 100 is to be mounted.

The fastening element 144 may also extend along the radial direction 146 away from the center 202 of the wire holder cap 100 and be configured to receive a complementary fastening element of the motor to be mounted in a direction opposite the mounting direction 108.

The wires 200 may be lead wires to power the motor when connected to the magnet wires of the motor.

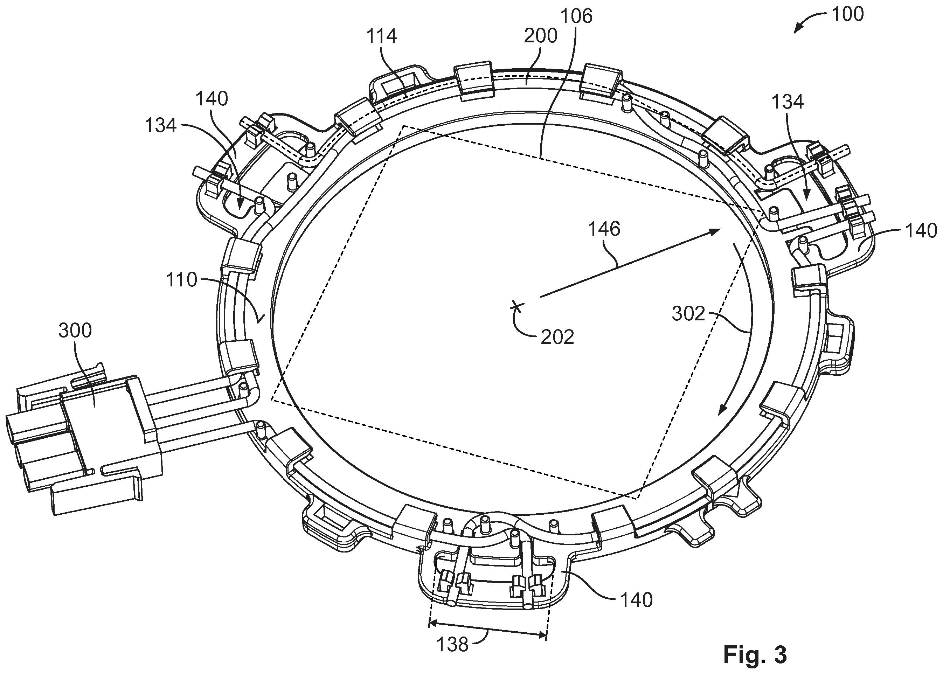

Figure 3 shows an embodiment of the wire holder cap 100 with wires 200 guided along the wiring path 114 and connected to a power connector 300. The embodiment of the wire holder cap 100 shown in Figure 3 comprises multiple wires 200 and may comprise, for example, three frames 140, each extending in radial direction 146 away from the center 202 of the wire holder cap 100. Each frame 146 may hold one or more wires 200. One embodiment of the frame 146 may comprise two wires 200 that are routed parallel to each other along the radial direction 146 across the respective contact opening 134.

Another embodiment of the frame 140 may comprise multiple wire retainers 116 to guide more than two wires 200 across the contact opening 134, for example, three parallel wires 200 extending in radial direction 146 from the center 202 of the wire holder cap 100.

The wiring path 114 may guide the at least one wire 200 along a circumferential direction 302 of the wire holder cap 100. The circumferential direction 302 may be parallel to the base plane 106. The wires 200 may be located on the base plane 106, each wire 200 abutting the axial wire holder surface 110 and/or the base plane 106.

The contact openings 132, in particular the length 138 of the contact opening 134, may be elongated and extend along the circumferential direction 302. Similarly, the fastening element 144, in particular a length of the respective through hole 148 may extend along the circumferential direction 302. The wire holder cap 100 may further comprise guiding elements 304 for an easier assembly of the final product.

The frames 140 may be arranged equidistant from each other along the circumferential direction 302. The fastening elements 144 may also be arranged equidistant along the circumferential direction 302. A fastening element 144 may be located between two frames 140 along the circumferential direction 302. The fastening element for 144 may be arranged located closer to the frame 140 along the circumferential direction 302 than to the next frame along the circumferential direction 302.

The wire retainers 116 may be arranged along the circumferential direction 302 on the ring base 102. The wire retainers 116 may extend from the ring base 102 from a flat surface 104, for example the axial wire holder surface 110 in the direction opposite the mounting direction 108. The L-shaped wire retainer 124 may further extend towards the center 202 of the wire holder cap 100 to hold one or more wires 200 in place, ensuring the correct wiring path 112.

The wire retainers 116 may extend from an exterior side 306 of the ring base 102, for example the same exterior side 306 facing away from the center 202, from which the frame 140 and/or the fastening elements 144 extend in radial direction 146 away from the center 202.

The wire holder cap 100 may comprise a termination access structure 308 that comprises the contact opening 134, the frame 140 surrounding the contact opening 134 and wire retainers 116 connected by the (virtual) straight line 139. The termination access structure 308 therefore enables a termination contact 204 to access a wire mounted to the termination access structure 308. One embodiment may comprise multiple termination access structures 308, for example three termination access structures 308 as shown in Figure 3 and may be arranged, similar to the frames 140 described above, along the circumferential direction 302, equidistant from each other along the circumferential direction 302.

Figure 4 shows an embodiment of the wire holder cap 100. The wire holder cap 100 may comprise wires 200 following a wiring path 112. The wires 200 may originate from a power connector 300 and may be guided on the axial wire holder surface 110 of the ring base 102 extending in the radial direction 146 away from the center 202 of the wire holder cap 100.

**In** Figure 4, the frame 140 extends along the radial direction 146 parallel to the base plane 106. The wires 200 can be secured by the wire retainers 116 on either side of the contact opening 134, spanning each wire 200 across the contact opening 134 parallel to the base plane 106.

The wire retainers 116 securing the wire or wires 200 along the wiring path 112 may be configured to be separable from the ring base 102. The separable wire retainers 116 may comprise fastening means 402. The fastening means 402 can comprise a retainer tab 128 that can engage with a complementary retention hole 404, which can be located on the ring base 102, in particular along the base plane 106.

The wire retainers 116 can be clipped onto the ring base 102 in the mounting direction 108. The wire retainers 116 may be arranged along the circumferential direction 302 of the ring base 102 and may be spaced apart from each other with respect to the circumferential direction 302. In one embodiment, the wire retainers 116 may be spaced apart equidistantly along the circumferential direction 302. Other embodiments can have wire retainers 116 with different distances 406 between two wire retainers 116 along the circumferential direction, adjusting the wire holder cap 100 to different mounting needs and different motors and/or stator frames of motors.

To better retain wires 200, the wire retainers 116 may comprise form-fitting cavities 408 that are configured to receive at least one wire 200. The at least one wire 200 may abut the wire retainer 116 within the cavity 408 when the wire retainer 116 is mounted to onto the ring base 102. The cavity 408 may be formed as a semicircle, for example and have the same or a slightly bigger diameter 410 than the diameter 412 of the respective wire 200.

The wire retainers 116 may be arranged following the wiring path 112, so each wire retainer 116 may have a face 414 facing the circumferential direction 302. All wire retainers 116, in particular the ones that are separable, may face the circumferential direction 302 with at least one face 414.

The wire retainers 116 may comprise two cavities 408 to receive two parallel wires 200 extending along the circumferential direction 302.

The wire holder cap 100 may further comprise an edge 416 extending along the mounting direction 108. The edge 416 may extend away from the base plane 106 towards the direction opposite the mounting direction 108. This is particularly advantageous to keep wires 200 or loose components in place before securing the wires 200 with the wire retainers 116, before mounting the wire retainers 116. The edge 416 may keep the wire 200 from straying away from the wiring path 112 too much to make assembling easier.

At the positions 418 where the frame 140 and/or the power connector 300 are located along the exterior side 306 of the ring base 102, the edge 416 can be removed or be lower than the rest of the ring base 102 along the circumferential direction 302. Removing the edge 416 at those positions 418 enables the wires 200 to extend radially in radial direction 146 without straining the wires 200 or risk cutting or breaking the wires 200 over the thin and therefore potentially sharp edge 416.

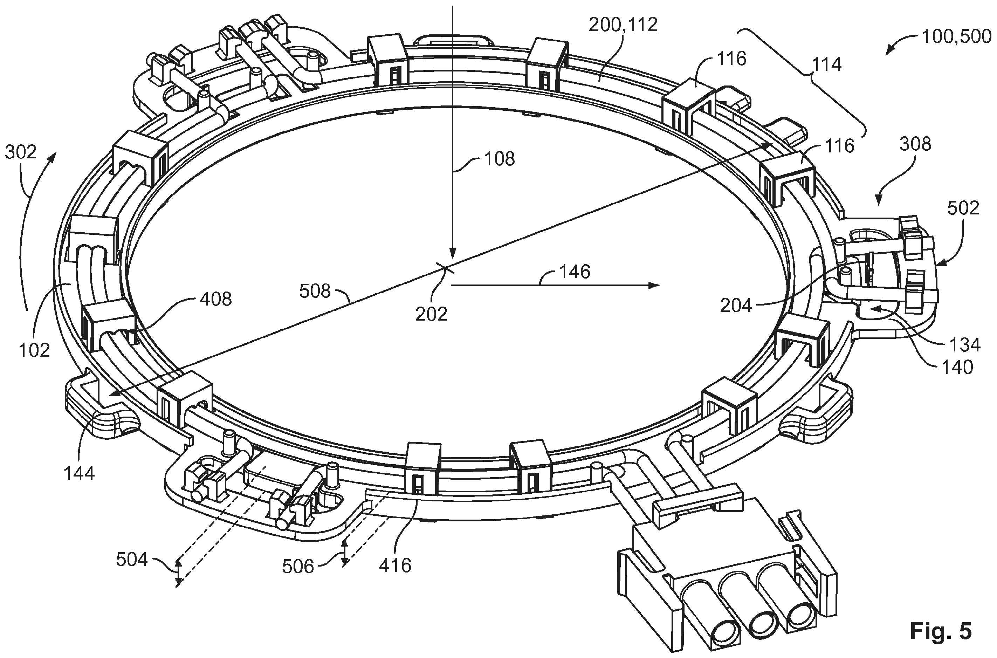

Figure 5 shows an embodiment of the wire holder cap 100 with the separable wire retainers 116 from Figure 4 already fastened to the ring base 102. The wires 200 may follow along the wiring path 112 and are secured by the plurality of wire retainers 114. In Figure 5, the cavities 408 of the separable wire retainer 116 receive two parallel wires 200 extending along the circumferential direction 302. The wires 200 may abut the separable wire retainer 116, especially at the position of the cavity 408.

In Figure 5, the wires 200 are secured to the ring base 102 and in a pre-assembly state 500 where they can be mounted to the motor or stator frame.

The wires 200 extending in radial direction 146 may be shortened so they extend only to the farthest edge 502 of the respective frame 140.

In Figure 5, an exemplary termination contact 204 is shown protruding through the contact opening 134 along the mounting direction 108, indicating that the wire 200 is now in a position to be terminated.

The wire holder cap 100 may comprise a material thickness 504 that is the same throughout the whole wire holder cap 100. The edge 416 may comprise a height 506. The height 506 of the edge 416 may be greater than the material thickness 504 of the wire holder cap 100 or the ring base 102.

The wire holder cap 100 may comprise an outer diameter 508 along the base plane 106. The frames 140 and/or termination access structures 308 may extrude from the farthest point of the diameter 508 of the ring base 102, therefore exceeding the diameter 508 of the ring base 102. The fastening elements 144 may also exceed the diameter 508 of the ring base 102, extending further away from the center 202 along the radial direction 146. In another embodiment, the fastening elements 144 may extend along the mounting direction 108 to be fastened with a complementary fastening element of the stator frame.

Figure 6 shows the assembly 600 with a wire holder cap 100 that comprises wires 200 and the power connector 300. The assembly 600 further comprises a stator frame 602. The stator frame 602 can be ring-shaped as well and may comprise a diameter 604 that approximately equals the diameter 508 of the ring base 102. The wire holder cap 100 may be adjusted to the dimensions of the stator frame 602 and can be mounted along the mounting direction 108 to the stator frame 602.

The assembly 600 in Figure 6 is shown in a pre-assembly state 604. In the pre-assembly state 604, the wire holder cap 100 is spaced apart from the stator frame 602 along the mounting direction 108. The wires 200 can already be mounted and guided along the wiring path 112 in the pre-assembly state 604 so that the at least one wire 200 of the wire holder cap 100 is ready to be terminated once the wire holder cap 100 is fully mounted to the stator frame 602 of the motor.

The stator frame 602 may comprise a protrusion or stator tooth 606 for windings of a motor. The stator tooth 606 may extend along the radial direction 146 towards an axis 608 extending through the center 202 of the ring base 102 along the mounting direction 108. The stator tooth 606 can protrude from an inner surface 610 of the stator frame 602. The inner surface 610 is the surface of the stator frame 602 that faces the axis 608.

Before assembling, the motor may already have windings spun on the stator tooth 606. The stator frame 602 may comprise multiple stator teeth 606 with multiple windings.

The stator frame 602 may further comprise a termination contact 204. The termination contact 204 may be arranged in a contact receptacle 612 of the stator frame 602. The contact receptacle 612 may be arranged along the circumference 614 of the stator frame 602 along the circumferential direction 302. The contact receptacle 612 may protrude in the direction opposite the mounting direction 108 towards the wire holder cap 100. The stator frame 602 may comprise a frame height 616. The contact receptacle 612 may protrude towards the wire holder cap 100 in the direction opposite the mounting direction 108 and may comprise a greater height 618 than the frame height 616 along the mounting direction 108.

The termination contact 204 may be configured as an IDC. The termination contact 204 may comprise a magnet wire end 620 configured to terminate a magnet wire of the motor. The magnet wire can be guided through the contact receptacle 612. The magnet wire may be led, for example, in radial direction 146 through the contact receptacle 612. The termination contact 204 may then be mounted to the contact receptacle 612 along the mounting direction 108 and cut through the insulation of the magnet wire within the contact receptacle 612, therefore establishing an electrical connection to the magnet wire.

The termination contact 204 may further comprise a lead wire end 622. The lead wire end 622 may protrude in the direction opposite the mounting direction 108 towards the wire holder cap 100. This lead wire end 622 may also be configured as an IDC to cut through the insulation of the wire 200, which can be a lead wire to power the motor.

The assembly 600 and/or the stator frame 602 may comprise multiple contact receptacles 612 along the circumference 614 of the stator frame 602 and therefore comprise multiple termination contacts 204 within the contact receptacles 612.

The stator frame 602 may be arranged coaxially to the wire holder cap 100. The wire holder cap 100 may be rotated about the axis 608 in a way, so that the termination contacts 204 are positioned directly under at least one wire 200 of the wire holder cap 100 along the mounting direction 108.

The stator frame 602 may further comprise a complementary fastening element 624 that is configured to engage with the fastening element 144 of the wire holder cap 100. The complementary fastening element 624 may comprise a fastening lip 626 that can engage with the fastening element 144 of the wire holder cap 100.

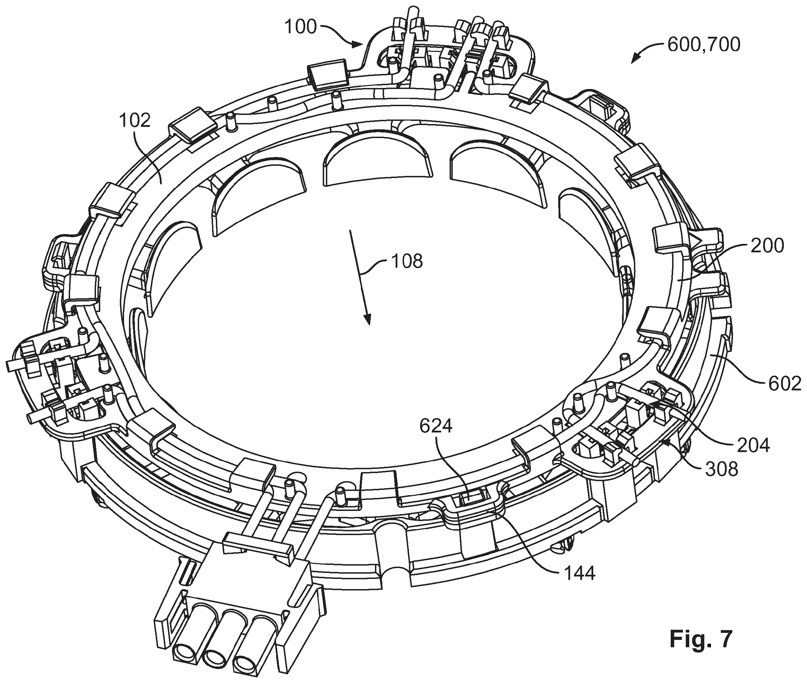

Figure 7 shows the assembly 600 in a pre-termination state 700. In the pre-termination state 700 the wire holder cap 100 is mounted onto the stator frame 602 in mounting direction 108. The fastening elements 144 of the wire holder cap 100 can engage with the complementary fastening elements 624 of the stator frame 602. With this engagement, the wire holder cap 100 cannot be moved opposite the mounting direction 108 without releasing the engagement between fastening element 144 and complementary fastening element 624.

The wires 200 can abut the termination contact 204 of the stator frame 602. In the pre-termination state 700, the wires 200 are not yet cut, but are in position to be cut or terminated by an IDC for example the termination contact 204.

In the pre-termination state 700 the wire holder cap 100 may also be spaced from the stator frame 602 along the mounting direction 108. The wire holder cap 100 or at least the termination access structure 308 and/or frame 140 can be pushed in mounting direction 108 and be terminated that way. This embodiment allows for a swift and simple termination of the wires 200. It is possible to terminate the wires 200 manually by pushing the wire holder cap 100 along the mounting direction 108 towards the stator frame 602.

In another embodiment, the assembly 600 can be inserted into a termination machine in the pre-termination state 700. The termination access structure 308 including the wires 200 can then be pushed in mounting direction 108 towards the stator frame 602. The stator frame 602 can alternatively be pushed towards the wire holder cap 100 in the direction opposite the mounting direction 108, for the IDC or the termination contact 204 to cut through the insulation of the at least one wire 200 on the wire holder cap 100. The termination can be done all at once by applying a consistent force in mounting direction 108 on the whole ring base 102. The termination may be done separately and individually for each termination access structure 308 and or each individual wire and termination contact pair.

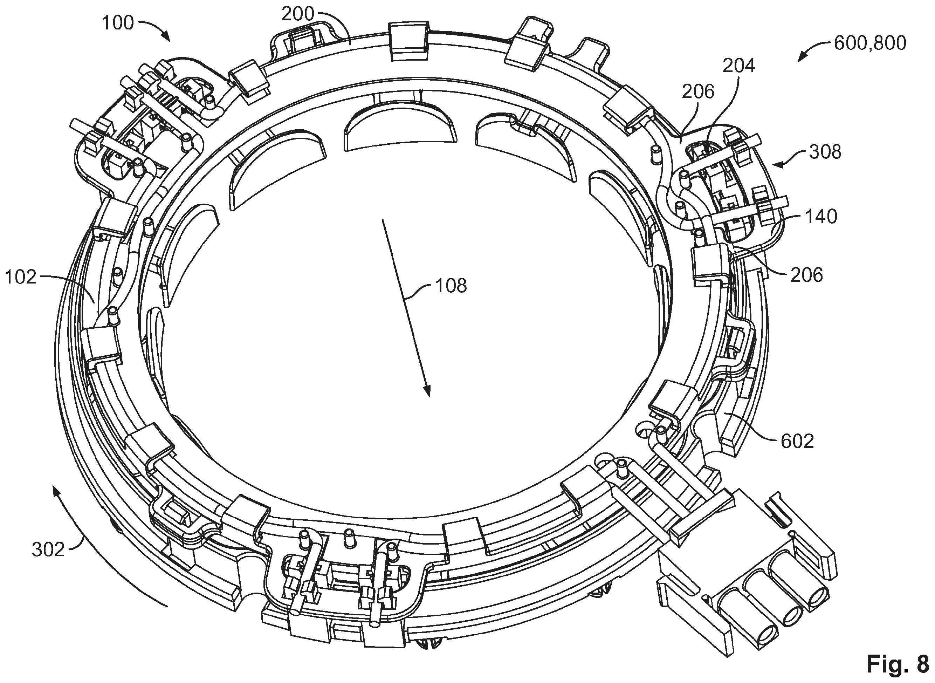

Figure 8 shows the assembly 600 in a terminated state 800. In the terminated state 800, the wires 200 are contacted by the termination contacts 204 of the stator frame 602. The insulation of the wires 200 is penetrated and an electrical connection is established between the termination contact 204 touching through the wire 200, thereby establishing an electrical connection between the wire 200 and the stator windings for example.

In the terminated state 800 the wire holder cap 100 is arranged closer to the stator frame 602 and mounting direction 108. The wire holder cap 100 may abut the stator frame 602, for example an edge of the stator frame 602. After the wires 200 are terminated, the user is free to cut the wire close to the termination contact 204.

Furthermore, the termination access structure 308 may be separated from the ring base 102. For the separation, the ring base 102 and the termination access structure 308 and/or the frame 140 may comprise a breakage line 206, such as a perforation or another mechanical modification to weaken the link between the ring base 102 and the frame 140. The frame 140 and/or the termination access structure 308 may be cut off the ring base 102 along the circumferential direction 302. This has the advantage of a more compact design of the whole assembly 600.

### Reference numerals

- 100: wire holder cap
- 102: ring base
- 104: flat surface
- 106: base plane
- 108: mounting direction
- 110: axial wire holder surface
- 112: wiring path
- 114: plurality of wire retainers
- 116: wire retainer
- 118: wire retainer pin
- 120: different wire direction
- 122: initial wire direction
- 124: L-shaped wire retainer
- 126: pair of wire retainer elements
- 128: retainer tab
- 130: location on axial wire holder surface side
- 132: axial wire holder surface side
- 134: contact opening
- 136: width of the contact opening
- 138: length of the contact opening
- 139: straight line
- 140: frame
- 142: strain protection
- 144: fastening element
- 146: radial direction
- 148: fastening slot of fastening element
- 200: wire
- 202: center of the wire holder cap
- 203a: side of contact opening further away from the center
- 203b: opposite side of contact opening closer to the center
- 204: termination contact
- 206: breakage line
- 300: power connector
- 302: circumferential direction
- 304: guiding element
- 306: exterior side of the ring base
- 308: termination access structure
- 402: fastening means
- 404: retention hole
- 406: distance between two wire retainers along the circumferential direction
- 408: form-fitting cavity of the wire retainer
- 410: diameter of cavity
- 412: diameter of wire
- 414: face of wire retainer
- 416: edge
- 418: position along exterior side with the wires extending in radial direction
- 420: position along exterior side without wires extending in radial direction
- 500: pre-assembly state
- 502: edge of frame
- 504: material thickness
- 506: height of edge
- 508: diameter of the ring base
- 600: assembly
- 602: stator frame
- 604: pre-assembly state
- 606: stator tooth for windings
- 608: axis through the center
- 610: inner surface of the stator frame
- 612: contact receptacle
- 614: circumference of the stator frame
- 616: frame height
- 618: receptacle height
- 620: magnet wire end of the termination contact
- 622: lead wire end of the termination contact
- 624: complementary fastening element
- 626: fastening lip of the complementary fastening element
- 700: pre-termination state
- 800: terminated state

## Claims

1. Wire holder cap (100) for mounting to a stator frame (600) of a motor along a mounting direction (108), comprising
a ring base (102) spanning a base plane (106);
a plurality (114) of wire retainers (116) configured to retain at least one wire (200) and to guide the at least one wire (200) along a wiring path (112) on an axial wire holder surface (110) of the ring base (102); wherein
the wire holder cap (100) comprises a contact opening (134) extending along the base plane (106), configured to enable axial access to at least one wire (200) extending along the base plane (106); wherein
some of the wire retainers (116) are located on opposite sides (203a, 203b) of the contact opening (134) along the base plane (106); and wherein
a straight line (139) between the wire retainers (116) located on opposite sides (203a, 203b) of the contact opening (134) crosses the contact opening (134) parallel to the base plane (106).

2. Wire holder cap (100) according to claim 1, wherein the contact opening (134) is surrounded by a frame (140) that protrudes from the ring base (102) in a radial direction (146) perpendicular to the mounting direction (108).

3. Wire holder cap (100) according to claim 2, wherein at least one wire retainer (116) is arranged on the frame (140).

4. Wire holder cap (100) according to any of the claims 2 to 3, wherein the frame (140) and the ring base (102) are formed monolithically.

5. Wire holder cap (100) according to any of the claims 2 to 4, wherein the frame (140) comprises a breakage line (206) and is configured to be separable from the ring base (102) along the breakage line (206).

6. Wire holder cap (100) according to any of the claims 1 to 5, wherein the wire holder cap (100) comprises wires (200) that are guided along the wiring path (112).

7. Wire holder cap (100) according to any of the claims 2 to 6, wherein the wire holder cap (100) comprises a termination access structure (308) that comprises the contact opening (134) and the frame (140).

8. Wire holder cap (100) according to claim 7, wherein the termination access structure (308) comprises at least one strain protection (142) for at least one wire (200).

9. Wire holder cap (100) according to any of the claims 7 to 8, wherein the wire holder cap (100) comprises multiple termination access structures (308) arranged along a circumferential direction (302) of the ring base (102).

10. Assembly (600) with a wire holder cap (100) according to any of the claims 1 to 9, comprising a stator frame (600) to which the wire holder cap (100) is mounted along the mounting direction (108).

11. Assembly (600) according to claim 10, wherein the stator frame (600) comprises a termination contact (204) configured to terminate at least one wire (200) guided along the wiring path (112).

12. Assembly (600) according to claim 11, wherein the termination contact (204) is configured to pass through the contact opening (134) of the wire holder cap (100) along the mounting direction (108).

13. Assembly (600) according to any of the claims 10 to 12, wherein in a pre-termination state (700), the wire holder cap (100) is fastened to the stator frame (600) and at least one wire (200) is positioned directly at the termination contact (204).

14. Assembly (600) according to any of the claims 10 to 13, wherein in a terminated state (800), the at least one wire (200) is terminated by the termination contact (204) and connected to the stator frame (602), and the termination contact (204) extends through the contact opening (134).

15. Assembly (600) according to any of the claims 10 to 14, wherein the assembly (600) comprises multiple termination contacts (204) passing through at least one contact opening (134) of the wire holder cap (100).
